# EUROPEAN PATENT SPECIFICATION

(11) **EP 2 686 379 B1**
(45) Date of publication and mention of the grant of the patent: **16.08.2017**
(21) Application number: 11728048.7
(22) Date of filing: 18.03.2011
(51) Int. Cl.: C08K 5/053, C08J 3/18, C08L 3/02, C08L 35/02, C08J 3/00, C08B 30/12, C08H 99/00, C08G 18/64, C08G 18/76, C08G 18/77, C08L 31/04, C08K 5/00

(54) **METHOD FOR PRODUCING PLASTICIZED STARCH BY USING 1,3-PROPANEDIOL AND RESULTING COMPOSITION**
VERFAHREN ZUR HERSTELLUNG VON PLASTIFIZIERTER STÄRKE MITTELS 1,3-PROPANDIOL UND ERHALTENE ZUSAMMENSETZUNG
MÉTHODE DE PRODUCTION DE AMIDON PLASTIFIÉ À L'AIDE DE 1,3-PROPANEDIOL ET COMPOSITION OBTENUE

(43) Date of publication of application: 22.01.2014
(73) Proprietor: Metabolic Explorer, 63360 Saint Beauzire (FR)
(72) Inventor: MACEDO GALVAING, Sophie, F-63400 Chamaliere (FR)
(74) Representative: Regimbeau
(86) International application number: PCT/IB2011/000776
(87) International publication number: WO 2012/127263

(56) References cited:
- EP-A1- 0 965 615
- WO-A2-2007/095255
- US-A1- 2007 203 276
- US-B1- 6 231 970

## Description

The present invention broadly concerns new starch-based plasticized compositions, methods to manufacture them, and uses thereof.

In the current context of global warming, of raise of cost of fossil raw materials, in particular petrol, of a general public opinion in favour of biodegradable, cleaner, more healthy, energy low cost products, of the evolution of tax and environmental regularisations, it is clear that there is a strong need for new plastic compositions and manufacturing methods thereof based on e.g. recyclable, low cost, clean, non-health-detrimental resources.

The choice of starch as raw material is extremely advantageous because it is recyclable, biodegradable and available in large scale quantities at very low cost in comparison with e.g. petrol or gas which are, at this moment in time, commonly used to produce plastics.

Because of their biodegradable criteria, starch-based compositions have already been studied to produce plastic compositions/materials. For example, WO 2009/095622 and WO 2009/095618 describe methods for preparing thermoplastic compositions based on plasticized starch and resulting compositions. In US 2001/0031297, it is a biodegradable material comprising a mixture of at least one polymer with at least one cereal grain flour and, optionally, one or more acceptable additives, which is disclosed.

However, in order to replace the wide range of fossil raw materials-based plastics, there is still a strong need to provide new diverse biodegradable materials with diverse physico-chemical properties.
Surprisingly, the inventors found that the 1,3-propanediol used as plasticizer bring to the plasticized flours and compositions higher water resistance than the other plasticizers known in the state of art.

### SUMMARY OF THE INVENTION

The present invention concerns a method for manufacturing a starch-based plasticized composition comprising the following steps of:
a) mixing a solid composition containing starch and a plasticizer composition comprising 1,3-propanediol (PDO), and
b) obtaining a plasticized composition by reacting the mixture of step (a).

The invention also concerns a method for manufacturing a plasticized material comprising the steps of:
α) mixing a starch-based plasticized composition according to the invention, and a polymer, and
β) obtaining a plasticized material.

The invention also concerns the plasticized starch obtained by the method of the invention, and a plasticized composition comprising the plasticized starch and a polymer.

### DEFINITIONS

### "Starch"

"Starch", also called "amylum", is a carbohydrate comprising a large number of glucose units joined together by glycosidic bonds. This polysaccharide is produced by all green plants as an energy store. Starch molecules arrange themselves in the plant in semi-crystalline granules. Depending on the arrangement of the molecules ones with each others, and / or their substitutions (i.e. alkylated, acetylated, etc), different properties of starches are emphasized or inhibited, e.g. better water solubility, higher fusion point, etc. The starch substrate used in the present invention may be selected from one or more native starches, starch derivatives, starchy material, grits such as corn grits wheat grits, and mixtures of two or more thereof.

The starch substrate used in the present invention can comprise non added water in a proportion ranging from 0% to 10% in weight of the total amount of said substrate. An advantageous type of starch used in the invention is granular starch.

Within the meaning of the invention, "granular starch" is native starch or physically, chemically or enzymatically modified starch, having conserved within the granules of starch, a semi-crystalline structure similar to that demonstrated in the starch grains found naturally in the reserve organs and tissues of plants, especially in cereals, seeds, tubers of potato or manioc, roots, bulbs, stems and fruits. These semi-crystalline macromolecules are mainly due to amylopectin, one of two main constituents of starch. In the native state, starch grains show a crystallinity ranging from 15 to 45% in weight which depends mainly on the botanical origin of the starch analyzed, and of any treatment done to it. The granular starch under polarized light microscopy shows a typical black cross, called "Maltese Cross", proving a granular crystalline state. The properties of granular starch are well known in the art.

The preferred granular starch which can be used for the preparation of the plasticized starch-compositions of the present invention may come from any botanical origins. It may be native starch grains such as wheat, corn, barley, triticale, sorghum and rice, tubers such as potatoes or cassava, and legumes such as peas and soybeans, and mixtures of such starches.

In a specific embodiment of the present invention, the granular starch, which can be of a botanical origin, is an acid hydrolysis modified starch, oxidative hydrolysis modified starch, enzymatic hydrolysis modified starch, or a starch modified by oxidation. It may be in particular a starch commonly called fluidized starch, oxidised starch or white dextrin. It can also be a physico-chemically modified starch but which has essentially kept the structure of native starch. Examples of such physico-chemically modified starch can be esterified and / or etherified starches, in particular, starches which are modified by acetylation, hydroxypropyl cationizing crosslinking, phosphate or succinylation, or starches treated in an aqueous medium at low temperature (annealing). The latter is known for increasing the crystallinity of starch. The granular starch which can be used in step (a) of the present invention before adding the plasticizer, advantageously presents at 20°C a rate of solubles in deionized water, less than 5% by weight. The granular starch which can be used in step (a) of the present invention can be nearly insoluble in cold water.

In a preferred embodiment, the granular starch is selected from thinned starches, oxidized starches, starches that have been chemically modified, white dextrins or mixtures of these products.

In another preferred embodiment, the granular starch can be starch native from cereals, tubercles, legumes; starch hydrolysed by acidic, oxidising or enzymatic pathways; oxidised starch, white dextrins.

The starch contained in the composition used in step (a) can be issued from a combination of treatments here-above listed, whether the starch is granular or not, or can be issued from a mixture of native starch(es), hydrolysis modified starch(es), oxidation modified starch(es) and physico-chemically modified starch(es).

Preferably the starch substrate is in powder form or as "flour" if it is a powder produced by grinding reserve organs and tissues of plant(s).

### "Starch-based plastic composition"

In the context of the present invention, the meaning of the expression "starch-based plastic composition" concerns a composition, containing starch or a modified starch as defined here-above, having a diminished vitreous transition temperature and / or a diminished cristallinity in comparison with those of the granular composition containing starch, used in step (a).

### "Mixing"

The mixing techniques used in the present invention are those commonly known in the art enabling to mix solid compositions. Mixing of ingredients, or dispersion of one phase into another, is an operation widely used in industry. The aim of these operations is to make homogeneous product using the minimum amount of energy and time. In blending or mixing of different kinds of solid matter, one is concerned with three broad aspects: diffusion, but not molecular diffusion (an expanded bed of free flowing material occurs with particles in random movements), convection (when volumes, or regions, of the mix are moved en-masse to different areas), and shear (mixing occurs along the slip planes between regions of particles). All these mechanisms may exist in a single mixer, but one or two may predominate. The determination of these three aspects will depend upon the diversity of products in terms of size-particles or granules, shape-irregularly shaped particles, moisture, surface nature-cohesive or non cohesive powders and hardness or pastiness of the solids. Moreover, the mixing process can be profoundly influenced by the flow characteristics of the particulate matter to be mixed. The mixer type needs to be right for the material mixed.

There are standard mixing devices, such as drum tumblers or Turbula mixers. Alternate device type such as static mixers can be used. Static mixers can save energy, disable segregation and effect particle migration. However, cohesive powders are more likely to require shear (and convection) hence blades and ploughs are more appropriates than tumbling. Specialized mixing screws can also be used to combine the materials. Some systems employ twin side-by-side screws to mix the mass, while others rely on a single screw with reconfigured geometry at the metering stage. In a twin side-by-side system, the two screws either counter- or co-rotate. The preferred mixing system in the present invention comprises a single screw or several screws, more preferably a twin-screw system. In addition, various paddles, forward and reverse flights, or kneading blocks may be applied for specific mixing effects. These screw systems possess the same feeding, shearing and metering capabilities as single screw machines, but with a more homogeneous rate of mixing. Solids, or combinations of solids with liquids, can be mixed with twin-screw mixers. Single mixing screws use special heads at the end of the screw to mix the combined materials, or "batter," while inside the barrel. There are several varieties of mixing head. The floating sleeve type uses a dimpled and flanged sleeve that floats between the screw and barrel.

All these mixing techniques are well known by the skilled person in the art, and other known mixing techniques, not disclosed here, are of course also applicable.

The mixing device can be directly linked to the system, e.g. the extruder, enabling the reaction of step (b), and/or extrusion of step (β).

### "Solid composition containing starch"

In the context of the present invention, the meaning of the expression "solid composition containing starch" of step (a) concerns any solid formulation, which comprise any type of solid-state starch(es) as defined hereabove in any type of solid-state form or shapes, e.g. flour, powder, beads, pastilles, or larger blocks. If it is granular starch which is contained in the solid composition, it can then also be referred to as "granular composition containing starch" in this case.

The compositions containing starch of step (a) contains at least 45% in weight of starch, preferably at least 60% in weight of starch, more preferably between 60 % and 90% in weight of starch, even more preferably between 60 % and 80% in weight of starch, most preferably between 60 % and 70% in weight of starch.
Fillers and other additives, detailed below, can be comprised into the solid starch-based compositions of step (a) and / or step (α) of the present invention.

### "Plasticizer composition"

Within the context of the present invention, the plasticizer always comprises 1,3-propanediol. It may also comprise a mixture of 1,3-propanediol and at least one other plasticizer.

The amount of 1,3-propanediol in the plasticizer composition is advantageously ranging from 10 to 100% by weight of the total plasticizer composition, preferably from 25 to 100%, more preferably from 50 to 100%, more preferably from 70 to 100%, even more preferably from 90 to 100%.

The plasticizer composition is incorporated into the composition containing starch of step (a), preferably at 10 to 150 parts by dry weight, more preferably at a rate of 25 to 120 parts by dry weight and even more preferably at 40 to 120 parts by weight per 100 parts dry weight of composition containing starch of step (a).

### "1,3-propanediol"

1,3-propanediol or PDO of any origin may be used in the method of the invention. Preferably, the PDO is a biobased product, obtained by conversion of a source of carbon such as sugars or glycerol by a microorganism.

Different ways to obtain biobased PDO by bioconversion of a source of carbon are known in the art and more particularly fermentative method to obtain PDO. The carbon source may be glucose or fructose or glycerol, particularly glycerol contained in industrial glycerine, such as glycerine obtained as a side product of biofuel production.

Microorganisms, methods for the production and purification of biobased PDO are particularly disclosed in WO 2008/052595, WO 2009/068110, WO 2010/037843, WO 2010:128070, EP 10305729 filed on July 5, 2010 and EP 10306234 filed on November 10, 2010.

In a preferred embodiment, the biobased PDO used in the method of the invention has purity of at least 99.5% and preferably of above 99.8%.

### "Plasticizer"

In the context of the present invention, the term "plasticizer" means any organic molecule which, when incorporated into the composition containing starch in step (a), preferably by a thermomechanical treatment at temperatures between 60 and 200°C, results in a decrease in glass transition temperature and / or a reduction in the crystallinity of the initial composition containing starch of step (a). The plasticizer(s) have advantageously a molecular weight less than 5000, preferably less than 1000, and in particular less than 400.

In the present invention, plasticizer always contains 1,3-propanediol.

In a specific embodiment of the invention, plasticizer may be a "plasticizer composition" containing 1,3-propanediol and at least one plasticizer other than 1,3-propanediol.

Examples of plasticizers other than 1,3-propandiol according to the present invention comprise water, sugars such as glucose, maltose, fructose or sucrose, polyols such as ethylene glycol, propylene glycol, polyethylene glycol (PEG), glycerol, sorbitol, xylitol, maltitol syrup or hydrogenated glucose, urea, salts of organic acids such as sodium lactate and mixtures thereof.

Starch plasticizer(s) are preferably selected from water, diols, triols and / or polyols such as glycerol, polyglycerol, isosorbide, sorbitans, sorbitol, mannitol, and / or glucose syrups hydrogenated, salts of organic acids such as sodium lactate, urea and mixtures thereof.
In the present invention, the preferred plasticizer other than 1,3-propanediol is selected from sorbitol or water or mixture thereof.

### "Plasticized composition"

In the context of the present invention, the expression "plasticized composition" means a starch-based composition having been reacted with the plasticizer composition as defined here-above.

### "Reacting" / "reaction"

In the context of the present invention, the terms "reacting" / "reaction" mean applying any type of process in which substances interact causing chemical or physical change(s) of the substances originally engaged in the reaction or process. In some cases, the simple fact of mixing together two or several substances will be sufficient to cause them to react. This encompasses reactions with catalysts also. In other cases, it will be necessary to apply a physical process, e.g. heat, ultrasounds, pressure, etc.

Preferably, heat is applied to the substances to enable them to react one with each other. For example the temperature can be brought within the range of 60°C to 200°C. More preferably the substances are heating whilst they are extruded or coextruded, within the temperature range of 60°C to 200°C.

### "Plasticized material"

In the context of the present invention, the expression "plasticized material" means a polymer having been mixed with a starch-based plasticized composition, and then reacted, e.g. coextruded. This polymer used in the plasticized compositions increased their water solubility.

### "Polymer"

In the context of the present invention, it is meant by "polymer" a non-starch polymer which can be of natural origin, or a synthetic polymer made from monomers of fossil and / or monomers based on renewable natural resources. The polymers of natural origin can be obtained by extraction from plant or animal tissues. Preferably, the polymer has an average molecular weight between 8500 and 10 million Daltons, preferably between 15,000 and 1,000,000 Daltons.

Polymer of natural origin can be chosen from flours, modified or unmodified proteins, unmodified or modified celluloses by carboxymethylation for example, ethoxylation, hydroxypropylation, cationization, acetylation, alkylation, hemicelluloses, lignins, modified or unmodified guar, the chitin and chitosan, gums and natural resins such as natural rubbers, rosins, terpene resins and shellac, polysaccharides extracted from algae such as carrageen and alginates, polysaccharides of bacterial origin such as xanthan, lignocellulosic fibers such as flax. The polymers can also be synthesized from monomers based on renewable natural resources such as plants, microorganisms and gases, especially from sugar, glycerin, oils or derivatives thereof such as their alcohols or their mono-, di- or polyfunctional acids, and in particular from molecules such as bio-ethanol, bio-ethylene glycol, bio-propanediol, bio-1,3-propanediol, bio-butanediol, lactic acid, bio-succinic acid, glycerol, isosorbide, sorbitol, sucrose, diols derived from vegetable or animal oils and resinic acids extracted from pine. Such measures may include polyethylene derived from bio-ethanol, polypropylene from bio-propanediol, polyamides derived from castor oil or polyols plant.

Synthetic polymer made from monomers of fossil origin, preferably contain active hydrogen functions selected from synthetic polymers like polyester, polyacrylic, polyacetal, polycarbonate, polyamide, polyimide, polyurethane, polyolefin, functionalized polyolefin, styrene, functionalized styrene, vinyl, functionalized vinyl, fluorine, functionalized polysulfone, functionalized polyphenylether, functionalized silicone, functionalized polyethers, etc.

Examples of polymers comprise: AHP, PBS, PBSA, the PBAT, PET, polyamides (PA) 6, 6-6, 6-10, 6-12, 11 and 12, copolyamides, polyacrylates, poly (vinyl alcohol), poly (vinyl acetate), ethylene-vinyl acetate copolymers (EVA), ethylene methyl acrylate (EMA), ethylene-vinyl alcohol (EVOH), polyoxymethylene (POM), acrylonitrile-styrene-acrylate (ASA), thermoplastic polyurethanes (TPU), polyethylene or polypropylene functionalized for example with silane, acrylic or maleic anhydride and styrene-ethylene-butylene-styrene (SEBS) functionalized for example with maleic anhydride and any mixtures of these polymers.

Preferably, the polymer is chosen from ethylene-vinyl acetate (EVA), polyethylene (PE) and polypropylene (PP) non-functionalized or functionalized, particularly with silane, acrylic or maleic anhydride moieties, thermoplastic polyurethanes (TPU), poly (butylene succinate) (PBS), poly (butylene succinate-co-adipate) (PBSA), poly (butylene adipate terephthalate) (PBAT), styrene-butylene-styrene and styrene- ethylene-butylene-styrene (SEBS), preferably functionalized with maleic anhydride, poly(ethylene terephthalate) amorphous (PETG), synthetic polymers produced from bio-monomers, polymers, plant extracts, animal tissues and microorganisms, optionally functionalized, and mixtures thereof.

Particularly preferred examples of polymers used in the present invention are ethylene-vinyl acetate copolymers (EVA) and their derivatives.

### DETAILLED DESCRIPTION OF THE INVENTION

One aspect of the invention is a method for manufacturing a starch-based plasticized composition comprising the following steps of:
a) mixing a solid composition containing starch and a plasticizer composition comprising 1,3-propanediol (PDO) and sorbitol, and
b) obtaining a plasticized composition by heating the mixture of step (a), as defined here above.

In one embodiment of the invention, the plasticizer composition consists in 1,3-propanediol.

In another embodiment of the present invention, the plasticizer composition comprises a mixture of 1,3-propanediol and sorbitol.

Advantageously, the proportion of sorbitol in the plasticizer composition of step (a) is comprised between 0.01% and 90%, more advantageously between 10% and 75%, even more advantageously between 20% and 60%, even more advantageously yet between 40% and 55% in dry weight of the total amount of plasticizer.

In another embodiment of the present invention, the plasticizer composition of step (a) comprises water.

Advantageously, the proportion of water in the plasticizer of step (a) is comprised between 0.01% and 60%, more advantageously between 1% and 35%, more advantageously between 5% and 20%, even more advantageously between 10% and 20% in weight of plasticizer.

In the method of manufacturing according to the present invention, either the plasticizer or the solid composition containing starch can comprise water in the here-above corresponding amounts.

The method of manufacturing a plasticized starch according to the present invention, may comprise the addition of a cross-linking agent. This cross-linking agent ensures liaison between starch in one hand and with the plasticizer in other hand. It brings to the plasticized composition a better water resistance. The cross-linking agent is chosen from:
- diisocyanates such as methylenediphenyl-diisocyanate (MDI), toluene-diisocyanate (TDI), naphthalene-diisocyanate (NDI), hexamethylen-diisocyanate (HDMI) and lysine-diisocyanate (LDI),
- organic diacids such as succinic acid, adipic acid, glutaric acid, oxalic acid, malonic acid, maleic acid and the corresponding anhydrides.

In an embodiment of the present invention, a cross-linking agent is added in step (a) of the method of manufacturing.

In another embodiment of the present invention, a cross-linking agent is added in step (b) of the method of manufacturing.

Advantageously, the proportion of cross-linking agent added is comprised between 0.01% and 20%, more advantageously between 1% and 15%, more advantageously between 5% and 15%, even more advantageously between 7% and 12% in dry weight of the total amount of plasticized composition obtained in step (b).

In the method of manufacturing according to the present invention, step (b) is advantageously realised by heating the mixture of step (a). For example the temperature can be brought within the range of 60°C to 200°C, preferably between 70°C and 180°C, more preferably between 90°C and 150°C, even more preferably between 100°C and 140°C.

The substances can be heated whilst they are extruded or coextruded, within the temperature range of 60°C to 200°C, preferably between 70°C and 180°C, more preferably between 90°C and 150°C, even more preferably between 100°C and 140°C. The heating of the substances can last between 1 min and 5 hours, preferably between 3 minutes and 1 hour, more preferably between 5 minutes and 30 minutes.

In one embodiment of the present invention, the method of manufacturing is characterised in that step (b) is realised by reactive extrusion. In a preferred embodiment of the present invention, the method of manufacturing is characterised in that steps (b) is realised in a cooker-extruder.

The invention also concerns a plasticized starch composition susceptible to be obtained by a process as defined above and in the examples, wherein the composition comprises at least 45 wt. % starch. The plasticized starch of the invention is distinct from the plasticized starch of the prior art since it comprises covalent links between hydroxyl groups of the sugar constituting the starch material and the hydroxyl groups of 1,3-propanediol via the cross-linking agent.

The invention also concerns a plasticized material comprising a mixture of a polymer and a plasticized starch composition of the invention. The polymer/plasticized starch weight ratio is advantageously comprised between 30/70 and 50/50.

The plasticized material may be obtained by a method comprising the steps of:
α) mixing a starch-based plasticized composition according to the invention, and a polymer, preferably at the same weight ratio disclosed here above, and
β) obtaining a plasticized material, preferably by extrusion.

The invention also concerns the plasticized starch obtained by the method of the invention, and a plasticized composition comprising the plasticized starch and a polymer.

The plasticized flour according to the invention may be characterized in that it presents a ratio of insolubles in water at 22°C after 24 hours higher than 70% in weight for a ratio of plasticizer of 40% and preferably higher than 73%, particularly a ratio of insolubles in water at 22°C after 24 hours higher than 70% in weight for a ratio of plasticizer of 30% and preferably higher than 73%, more particularly a ratio of insolubles in water at 22°C after 24 hours higher than 70% in weight for a ratio of plasticizer of 20% and preferably higher to 80%.

The plasticized composition according to the invention may be characterized in that it presents a ratio of insolubles in water at 22°C after 24 hours higher than 97% in weight for a ratio of plasticizer of 40%.

These ratios of insolubles are higher for compound according to the invention than for compounds obtained with glycerol and/or sorbitol as plasticizer.

The plasticized material of the invention may be further manufactured into products of various shapes according to the use of said material, known to the person skilled in the art.

### BRIEF DESCRIPTION OF THE DRAWINGS

Other advantages and characteristics of the invention will become manifest from the examples below concerning the preparation and use of a biodegradable material according to the invention with reference to the attached figures in which:

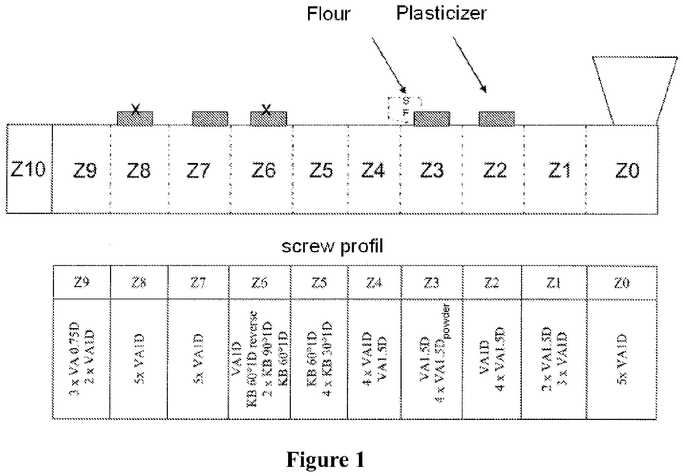

**Figure 1****:** describes an example of extrusion device used in the manufacturing method of the present invention. The plasticizer is incorporated in zone Z2 (12-13D) through a shaft. The flour is incorporated in zone Z3 (17-19D) through the side-feeder/shaft (see Figure 1). The shafts in zone Z3 and Z6 are kept open to facilitate the incorporation of the flour for the first shaft and prevent pressure at the end of plasticizing for the second shaft.

### EXAMPLES

The following examples illustrate the most preferred methods for preparing the compositions according to the present invention. However, the invention does not only limit itself to these examples.

### A. Evaluation of the PDO as a plasticizer for vegetable flours

### Example 1: obtaining plasticized flour

The tests were conducted on a twin-screw extruder wherein the screws are of a diameter equal to 26 mm and with lengths equal to 50 times their diameter (50D). The plasticizer is incorporated in zone Z2 (12-13D) through a shaft. The flour is incorporated in zone Z3 (17-19D) through the side-feeder/shaft (see Figure 1). The shafts in zone Z3 and Z6 are kept open to facilitate the incorporation of the flour for the first shaft and prevent pressure at the end of plasticizing for the second shaft. In this study, PDO as flour plasticizer and wheat flour containing different rates of starch were used:
- wheat flour, "type 55", which contains 70% starch and 15% water
- grits made of hard wheat with 45% starch and containing 15% water.

Concerning plasticizers, four plasticizers were evaluated:
- A mixture Glycerol/H₂O (84/16)
- A mixture PDO/H₂0 (84/16)
- A mixture Glycerol / sorbitol/H₂0 (42/42/16)
- A mixture PDO/sorbitol/H₂0 (42/42/16)

Glycerol is known to be the best starch plasticizer after water. Sorbitol is also a very good starch plasticizer. Because of its molar mass twice that of glycerol, Sorbitol however tends to migrate more easily to the surface of plasticized starch. That's why a mixture Glycerol / sorbitol 50/50 (dry) offers a good compromise between a good starch plasticizer and its migration properties.
Testing plasticization of wheat flour type 55 (containing 70% starch) was performed at three different levels of plasticization: 20%, 30% and 40%. The flours obtained were respectively called FP8020, FP7030 and FP6040.

Regarding wheat grits which contains only 45% starch, the quantity of plasticizer was chosen so that each plasticized grits had a ratio (starch / plasticizer) equivalent to that of plasticized flours (T55) FP6040 , FP7030 and FP8020.

Therefore, GP8020 is composed of 86.2% of grits and 13.8% of plasticizer and corresponds to an equivalent FP8020. GP7030 and GP6040 comprise respectively 78.4% grits and 21.6% of plasticizer and 70% grits and 30% of plasticizer, and correspond respectively to FP7030 and FP6040 equivalents.

The extrusion parameters used for plasticizing the flours (T° / screw speed / total flow) were adjusted for each test in order to obtain an optimal quality of plasticizing. These parameters are given in Table 1.

**Table 1: extrusion parameters used for plasticizing the flours**

| Plasticizer (dry) | T55 Flour | Hard wheat grits |
|---|---|---|
| Glycerol | - T°C profile: | - T°C profile: |
| | 60/70/80/90/100/110/110/110/110/110 | 60/70/80/90/100/110/110/110/110/110 |
| | - screw speed = 150 rpm regardless of the rate of plasticizing | - Screw speed = 50 rpm for GP6040 |
| | - Flow 2.5 kg/h for FP6040 | - Flow 3.8 kg / h for GP6040 |
| | 3.4 kg/h for FP7030 | |
| | 5 kg/h for FP8020 | |
| PDO | - T°C profile: | - T°C profile: |
| | 60/70/90/110/130/130/110/60/60/90 | 60/70/90/110/130/130/110/60/60/90 |
| | - Screw speed to readjust depending on the rate of plasticizing | - Screw speed = 200 rpm for GP6040 |
| | 240 rpm for FP6040 (flow rate 4.7 kg/h) | - Flow 3.9 kg / h for GP6040 |
| | 70 rpm for FP7030 (flow rate 2.0 kg/h) | |
| Glycerol / sorbitol (50/50) | - T°C profile: | - T°C profile: |
| | 60/70/80/90/100/110/110/110/110/110 | 60/70/80/90/100/110/110/110/110/110 |
| | Screw speed = 150 rpm regardless of - the rate of plasticizing | - Screw speed = 50 rpm for GP6040 |
| | - Flow 2.8 kg/h for FP6040 | - Flow 3.8 kg / h for GP6040 |
| | 3.7 kg/h for FP7030 | |
| | 5.6 kg/h for FP8020 | |
| PDO / sorbitol (50/50) | - T°C profile: | - T°C profile: |
| | 60/70/80/90/100/110/110/110/110/110 | 60/60/90/110/130/130/110/60/60/90 |
| | - Screw speed = 150 rpm regardless of - the rate of plasticizing | - Screw speed = 50 rpm for GP6040 |
| | - Flow 2.8 kg/h for FP6040 | - Flow 3.8 kg / h for GP6040 |
| | 3.7 kg/h for FP7030 | |
| | 5.6 kg/h for FP8020 | |

### B. Results: Effectiveness of PDO as plasticizer

### Example 2: plasticizing flour Type 55

In order to evaluate the plasticizing effectiveness of different plasticizers, differential thermal analysis (DTA) and thermomechanical analysis (DMTA) were performed. The analysis conditions are given here-under
ATD
- Increasing ramp temperature from -80°C to 150°C at 10°C / min.
DMTA
- Geometry: Traction
- Frequency: 1Hz
- Increasing ramp temperature from -100 to 200°C at 3°C / min

The quality of plasticizing is evaluated with the glass transition (DTA) and / or mechanical relaxation associated with glass transition temperature (DMTA). These are clear transition and occur at low temperature for effective plasticizers or shift towards higher temperatures and spread over more or less wide ranges of temperatures for less effective plasticizers.

The analysis of various plasticizing parameters shown in Table 1, the qualitative observation of plasticized material obtained and the use of DMTA and DTA analysis show that:
- PDO is a less effective plasticizer than glycerol including a limited window of plasticization than glycerol (FP8020 impossible with PDO) and harder plasticizing conditions compared to glycerol, require more shearing and higher temperatures.
- The addition of sorbitol to PDO enables to increase the plasticizing effectiveness of the latter and obtain in the same plasticizing conditions a plasticizing effectiveness close to that of the mixture of glycerol/sorbitol (50/50).

Note: The fact that the PDO is a poorer plasticizer than glycerol is not surprising since even if PDO has a molecular weight roughly equivalent to that of glycerol, it lacks a hydroxyl group and therefore has less affinity with starch.

### Example 3: plasticizing of hard wheat grits

Only the samples of GP6040 are qualitatively similar to a plastic material. For GP7030 and GP8020, the excessively high viscosity resulted in a significant thermal damage.

As in the case of flour type 55, the analysis of various plasticizing parameters shown in Table 1, the qualitative observation of plastic material obtained and the use of DTA and DMTA analysis show that:
- The PDO is a less effective plasticizer than glycerol with tougher conditions of plasticization than glycerol, requiring more shearing and higher temperatures.
- The addition of sorbitol to the PDO enables to increase the plasticizing effectiveness but it does not match that of the mixture Glycerol / sorbitol (50/50). On the other hand, tougher conditions of plasticizing are needed with notably a higher plasticizing temperature.

### Example 4: water sensitivity of plasticized flours

The water sensitivity of plasticized flours was assessed by measuring the rate of water absorption after a month left in the open air, and measuring the rate of insolubles after 24 hours immersion in water at 22 ° C. The plasticized flours had been dried in advance in an oven at 80 ° C for 24 hours.

In order to determine the rate of insolubles, a sample of dried plasticized flour of mass m 1 is immersed in water (water volume in millilitres equal to 100 times the mass in g of the sample). After 24 hours immersion in water, the fraction of the swollen and non-disintegrated plasticized flour sample is collected, dried for 24 hours at 80 ° C, and weighed (mass m 2). The rate of insolubles is the mass ratio [m 2 / m 1].

Table 2 gives the rates of insolubles and rates of water absorption of plasticized flours FP 6040, FP7030, FP8020, and GP6040.

**Table 2: Ratios of insolubles and water absorption rate of plasticized flours FP6040, FP7030, FP8020 and GP6040**

| FP | Plasticizer | % of water uptake after 1 month | Rate of insolubles after 24 hours immersed |
|---|---|---|---|
| FP6040 | Glycero 1/H₂0 | 3.7 | 62.5 |
| | PDO/H₂O | 4.6 | 73.0 |
| | Glycerol/Sorbitol/H₂O | 2.2 | 62.7 |
| | PDO/Sorbitol/H₂0 | 2.1 | 70.9 |
| FP7030 | Glycerol/H₂0 | 3.4 | 72.5 |
| | PDO/H₂O | 4.7 | 73.4 |
| | Glycerol/Sorbitol/H₂O | 1.8 | 73.6 |
| | PDO/Sorbitol/H₂0 | 2.3 | 73.4 |
| FP8020 | Glycerol/Sorbitol/H₂O | 1.9 | 84.1 |
| | PDO/Sorbitol/H₂0 | 0.9 | 84.3 |
| GP6040 | Glycerol/H₂0 | 10.5 | - |
| | PDO/H₂O | 4.4 | - |
| | Glycerol/Sorbitol/H₂O | 3.9 | - |
| | PDO/Sorbitol/H₂0 | 2.4 | - |

Concerning water absorption, the results do not enable to conclude to a decrease in hygroscopicity of the PDO plasticized flour instead of glycerol plasticized flour.

However, the results concerning the solubility tests show unambiguously the PDO's positive role. Indeed, for the high levels of plasticizer (40%), using PDO instead of glycerol enables to increase by 8 to 10% the rate of insolubles (see Table 2) and decrease disintegration of immersed material.

Less hydrophilic than glycerol, the PDO migrates less easily. For lower plasticizing rates (30% or less), the positive effect is not noticeable anymore. Rates measured for insoluble plasticized compositions with PDO or glycerol are almost identical.

### Example 5: Redispersion of flours in a plastic EVA 18 (Escorene FL 1418)

To complete the study of plasticized flours with PDO, the different flours prepared were redispersed in an EVA 18 (ethylene-co-vinyl acetate and 18% acetate) matrix.

Redispersion was performed on an extruder of 21 mm of diameter and with a length equal to 50D, with four separate heating zones of 11D.

The screw profile used was a standard screw profile suitable for the mixing of polymers.

The extrusion conditions are as follows:
- Mixing EVA / plasticized flour (50/50) incorporated into the extruder in the form of a dry blend
- Flow rate: 2kg / h
- Temperature profile: Z1= 180°C / Z2 = 180°C / Z3=160°C / Z4 = 160°C / 160 die
- Screw rotation speed: 300 rpm.

Table 3 shows the notation used to identify hybrids prepared according to the type of flour and the nature of the plasticizer.

**Table 3: 18 EVA /FP (50/50) hybrids prepared from different plasticized flours**

| Notation | Flour type | Flour plasticizer (dry) |
|---|---|---|
| HyFP6040-Gl | FP6040 | Glycerol |
| HyFP6040-PDO | FP6040 | PDO |
| HyFP6040-Gl/Sorb | FP6040 | Glycerol/Sorbitol (50/50) |
| HyFP6040-PDO/Sorb | FP6040 | PDO/Sorbitol (50/50) |
| HyFP7030-Gl | FP7030 | Glycerol |
| HyFP7030-PDO | FP7030 | PDO |
| HyFP7030-Gl/Sorb | FP7030 | Glycerol/Sorbitol (50/50) |
| HyFP7030-PDO/Sorb | FP7030 | PDO/Sorbitol (50/50) |
| HyFP8020-Gl/Sorb | FP8020 | Glycerol/Sorbitol (50/50) |
| HyFP8020-PDO/Sorb | FP8020 | PDO/Sorbitol (50/50) |

After completion, the resulting hybrids were dried and injected (H2 traction test). From the injected specimens, the mechanical performance (traction at 50 mm / min) and resistance to water (immersion in water at 22 ° C for 24 hours) were evaluated.
The measured traction parameters are presented in Table 4. The swelling rate and insolubles are given in Table 5.

**Table 4: Traction parameters of EVA / FP (50/50) hybrids**

| Hybrid | Conventional limit of elasticity | | Threshold | | Rupture | |
|---|---|---|---|---|---|---|
| | σ (MPA) | ε (%) | σ (MPA) | ε (%) | σ (MPA) | ε (%) |
| HyFP6040-Gl | 2.49 | 17 | 4.7 | 200 | 4.6 | 235 |
| HyFP6040-PDO | 2.1 | 18 | 4.2 | 238 | 4.1 | 260 |
| HyFP6040-Gl/Sorb | 3.2 | 20 | 5.7 | 133 | 5.3 | 240 |
| HyFP6040-PDO/Sorb | 2.4 | 17 | 5.2 | 250 | 5.1 | 288 |
| HyFP7030-Gl | 2.4 | 12 | 4.9 | 190 | 4.7 | 230 |
| HyFP7030-PDO | 1.7 | 15 | 3.9 | 210 | 3.8 | 225 |
| HyFP7030-Gl/Sorb | 2.2 | 18 | 5.2 | 288 | 5.1 | 308 |
| HyFP7030-PDO/Sorb | 2.1 | 19 | 4.1 | 233 | 3.9 | 258 |
| HyFP8020-Gl/Sorb | 1.4 | 13 | 3.9 | 213 | 3.8 | 230 |
| HyFP8020-PDO/Sorb | 1.4 | 17 | 3.5 | 193 | 3.3 | 208 |

**Table 5: Rates of swelling and insoluble hybrid EVA / PS (50/50)**

| Hybrid | 24 hour immersion in 22°C water | |
|---|---|---|
| | Rate of swelling (%) | Rate of insolubles (%) |
| HyFP6040-Gl | 6.7 | 96.6 |
| HyFP6040-PDO | 8.7 | 98.6 |
| HyFP6040-Gl/Sorb | 4.5 | 95.4 |
| HyFP6040-PDO/Sorb | 8.3 | 98.4 |
| HyFP7030-Gl | 7.4 | 97.3 |
| HyFP7030-PDO | 9.3 | 99.4 |
| HyFP7030-Gl/Sorb | 4.8 | 97.7 |
| HyFP7030-PDO/Sorb | 8.8 | 99.4 |
| HyFP8020-Gl/Sorb | 7.5 | 98.3 |
| HyFP8020-PDO/Sorb | 7.9 | 99.2 |

The results show that the performances of hybrids were affected by the plasticizer in the plasticized flour.

Indeed, on the mechanical performance level, the hybrids comprising glycerol plasticized flours have superior performance (constraints to proof stress -i.e. elasticity, threshold stress, rupture stress) than those of hybrid plasticized with PDO. This result is likely related to the fact that the PDO is a less effective plasticizer than glycerol.

Concerning resistance to water, we systematically found a rate of insolubles higher when the hybrids comprised PDO plasticized flours instead of glycerol plasticized flours. This result is likely related to the fact that the less hydrophilic PDO migrates less easily than glycerol and thus confers hybrids less sensitivity to water.

Therefore, the advantages and disadvantages of replacing the glycerol by the PDO in plasticized flours directly impact the performances of hybrid EVA / plastic flour (50/50).

PDO is a plasticizer of flour. PDO being less hydrophilic than glycerol, it provides a reduced sensitivity to water to the plasticized flour. Plasticizing effectiveness can however be modulated with combining PDO with other plasticizers such as sorbitol.

### LIST OF REFERENCES

- WO 2009/095622
- WO 2009/095618
- US 2001/0031297
- WO 2008/052595
- WO 2009068110
- WO 2010/037843
- WO 2010/128070
- EP 10305729 filed on July 5, 2010
- EP 10306234 filed on November 10, 2010

## Claims

1. A method for manufacturing a starch-based plasticized composition comprising the following steps of:
a) mixing a solid composition containing starch and a plasticizer composition comprising 1,3-propanediol and sorbitol, and
b) obtaining a plasticized composition by heating the mixture of step (a).

2. The method of claim 1, wherein the solid composition in step (a) contains at least 45 weight % of starch.

3. The method of claim 1, wherein, the solid composition in step (a) contains at least 60 weight % of starch.

4. The method of any of claims 1 to 3, wherein the amount of 1,3-propanediol in the plasticizer composition is ranging from 25 to 100% by weight of the total plasticizer composition.

5. The method of any of claims 1 to 3, wherein the amount of 1,3-propanediol in the plasticizer composition is ranging from 50 to 100% by weight of the total plasticizer composition.

6. The method of one of claims 1 to 5, wherein it comprises the addition of a cross-linking agent chosen from:
- diisocyanates such as methylenediphenyl-diisocyanate (MDI), toluene-diisocyanate (TDI), naphthalene-diisocyanate (NDI), hexamethylen-diisocyanate (HDMI) and lysine-diisocyanate (LDI),
- organic diacids such as succinic acid, adipic acid, glutaric acid, oxalic acid, malonic acid, maleic acid and the corresponding anhydrides.

7. The method of one of claims 1 to 6, wherein step (b) is realised by reactive extrusion.

8. A method for manufacturing a plasticized material comprising the steps of:
α) mixing the starch-based plasticized composition obtained according to claims 1 to 7 and a polymer, and
β) obtaining a plasticized material by extrusion.

9. A plasticized starch composition comprising starch and a plasticizer composition comprising 1,3-propanediol and sorbitol wherein the composition comprises at least 45% by weight of starch.

10. The plasticized starch composition of claim 9 wherein the amount of 1,3-propanediol in the plasticizer composition is ranging from 25 to 100% by weight of the total plasticizer composition.

11. A plasticized material comprising a mixture of a polymer and a plasticized starch composition of any of claims 9 to 10.

12. The plasticized composition of claim 11, wherein the weight ratio of polymer and plasticized starch composition is comprised between 30/70 and 50/50.

## Patentansprüche

1. Verfahren zur Herstellung einer plastifizierten Zusammensetzung auf Stärkebasis, umfassend die folgenden Schritte:
a) Mischen einer festen Zusammensetzung, welche Stärke enthält, und eine plastifizierenden Zusammensetzung, welche 1,3-Propandiol und Sorbitol umfasst, und
b) Erhalten einer plastifizierten Zusammensetzung durch Erhitzen des Gemischs von Schritt (a).

2. Verfahren nach Anspruch 1, wobei die feste Zusammensetzung in Schritt (a) mindestens 45 Gewichts-% Stärke enthält.

3. Verfahren nach Anspruch 1, wobei die feste Zusammensetzung in Schritt (a) mindestens 60 Gewichts-% Stärke enthält.

4. Verfahren nach einem der Ansprüche 1 bis 3, wobei die Menge von 1,3-Propandiol in der plastifizierenden Zusammensetzung in einem Bereich von 25 bis 100 Gewichts-% der gesamten plastifizierenden Zusammensetzung liegt.

5. Verfahren nach einem der Ansprüche 1 bis 3, wobei die Menge von 1,3-Propandiol in der plastifizierenden Zusammensetzung in einem Bereich von 50 bis 100 Gewichts-% der gesamten plastifizierenden Zusammensetzung liegt.

6. Verfahren nach einem der Ansprüche 1 bis 5, wobei es die Zugabe eines Vernetzungsmittels umfasst, das ausgewählt wird aus:
- Diisocyanaten, wie beispielweise Methylendiphenyldüsocyanat (MDI), Toluoldiisocyanat (TDI), Naphthalendüsocyanat (NDI), Hexamethylendiisocyanat (HDMI) und Lysindüsocyanat (LDI),
- organischen Disäuren, wie beispielsweise Bernsteinsäure, Adipinsäure, Glutarsäure, Oxalsäure, Malonsäure, Maleinsäure und den entsprechenden Anhydriden.

7. Verfahren nach einem der Ansprüche 1 bis 6, wobei Schritt (b) durch reaktive Extrusion ausgeführt wird.

8. Verfahren zur Herstellung eines plastifizierten Materials, umfassend die folgenden Schritte:
α) Mischen der erhaltenen plastifizierten Zusammensetzung auf Stärkebasis nach Anspruch 1 bis 7 und ein Polymer, und
β) Erhalten eines plastifizierten Materials durch Extrusion.

9. Plastifizierte Stärkezusammensetzung, umfassend Stärke und eine plastifizierenden Zusammensetzung mit 1,3-Propandiol und Sorbitol, wobei die Zusammensetzung mindestens 45 Gewichts-% Stärke umfasst.

10. Plastifizierte Stärkezusammensetzung nach Anspruch 9, wobei die Menge von 1,3-Propandiol in der plastifizierenden Zusammensetzung in einem Bereich von 25 bis 100 Gewichts-% der gesamten plastifizierenden Zusammensetzung liegt.

11. Plastifiziertes Material, umfassend ein Gemisch aus einem Polymer und einer plastifizierten Stärkezusammensetzung nach einem der Ansprüche 9 bis 10.

12. Plastifizierte Zusammensetzung nach Anspruch 11, wobei das Gewichtsverhältnis von Polymer und plastifizierter Stärkezusammensetzung zwischen 30:70 und 50:50 liegt.

## Revendications

1. Procédé de fabrication d'une composition plastifiée à base d'amidon, comprenant les étapes suivantes de :
a) mélange d'une composition solide contenant de l'amidon et d'une composition plastifiante comprenant du 1,3-propanediol et du sorbitol, et
b) obtention d'une composition plastifiée par chauffage du mélange de l'étape (a).

2. Procédé selon la revendication 1, dans lequel la composition solide à l'étape (a) contient au moins 45 % en poids d'amidon.

3. Procédé selon la revendication 1, dans lequel la composition solide à l'étape (a) contient au moins 60 % en poids d'amidon.

4. Procédé selon l'une quelconque des revendications 1 à 3, dans lequel la quantité de 1,3-propanediol dans la composition plastifiante va de 25 à 100 % en poids de la composition plastifiante totale.

5. Procédé selon l'une quelconque des revendications 1 à 3, dans lequel la quantité de 1,3-propanediol dans la composition plastifiante va de 50 à 100 % en poids de la composition plastifiante totale.

6. Procédé selon l'une quelconque des revendications 1 à 5, comprenant l'addition d'un agent réticulant choisi parmi :
- les diisocyanates comme le diisocyanate de diphénylméthylène (MDI), le diisocyanate de toluène (TDI), le diisocyanate de naphtalène (NDI), le düsocyanate d'hexaméthylène (HDMI) et le diisocyanate de lysine (LDI),
- les diacides organiques comme l'acide succinique, l'acide adipique, l'acide glutarique, l'acide oxalique, l'acide malonique, l'acide maléique, et les anhydrures correspondants.

7. Procédé selon l'une des revendications 1 à 6, dans lequel l'étape (b) est réalisée par extrusion réactive.

8. Procédé de fabrication d'un matériau plastifié comprenant les étapes de :
α) mélange de la composition plastifiée à base d'amidon obtenue selon les revendications 1 à 7, et d'un polymère, et
β) obtention d'un matériau plastifié par extrusion.

9. Composition d'amidon plastifiée comprenant de l'amidon et une composition plastifiante contenant du 1,3-propanediol et du sorbitol, dans laquelle la composition comprend au moins 45 % en poids d'amidon.

10. Composition d'amidon plastifiée selon la revendication 9, dans laquelle la quantité de 1,3-propanediol dans la composition plastifiante va de 25 à 100 % en poids de la composition plastifiante totale.

11. Matériau plastifié comprenant un mélange d'un polymère et d'une composition d'amidon plastifiée selon l'une quelconque des revendications 9 à 10.

12. Composition plastifiée selon la revendication 11, dans laquelle le rapport en poids du polymère et de la composition d'amidon plastifiée est compris entre 30/70 et 50/50.
